# FASCICULE DE BREVET EUROPEEN

(11) **EP 3 000 732 B1**
(45) Date de publication et mention de la délivrance du brevet: **10.05.2017**
(21) Numéro de dépôt: 15183096.5
(22) Date de dépôt: 31.08.2015
(51) Int. Cl.: B64D 11/06, B64D 25/06, B60R 22/02

(54) **BANQUETTE POUR AERONEF ORGANISEE POUR L ACCUEIL D'UN NOMBRE VARIABLE DE PASSAGERS**
SITZBANK FÜR LUFTFAHRZEUG ZUR AUFNAHME EINER UNTERSCHIEDLICHEN ANZAHL VON PASSAGIEREN
AN AIRCRAFT BENCH ORGANIZED TO RECEIVE A VARIABLE NUMBER OF PASSENGERS

(30) Priorité: 23.09.2014 FR 1402130
(43) Date de publication de la demande: 30.03.2016
(73) Titulaire: Airbus Helicopters, 13725 Marignane Cedex (FR)
(72) Inventeur: JOFFRE, Jean-François, 13500 MARTIGUES (FR); ALMEIDA-GONZALEZ, Ernesto, 13090 AIX EN PROVENCE (FR)
(74) Mandataire: Pouillot, Laurent Pierre Paul

(56) Documents cités:
- EP-A1- 0 716 980
- WO-A2-2008/027832
- FR-A1- 2 851 974
- US-A1- 2008 211 219

## Description

La présente invention est du domaine des sièges pour aéronefs, giravions notamment, agencés pour sécuriser les passagers installés sur les sièges en cas de forte décélération de l'aéronef et/ou en cas de crash.

La présente invention relève plus particulièrement de l'organisation structurelle d'une banquette pour aéronefs permettant d'accueillir un nombre variable de passagers dans les conditions requises de sécurisation du transport des passagers propres aux aéronefs.

Les sièges pour aéronefs comportent des moyens de protection des passagers installés sur les sièges en cas de forte décélération de l'aéronef et/ou en cas de crash. A cet effet, les sièges pour aéronefs sont couramment équipés des dispositions ci-après énoncées.

En premier lieu, un siège pour aéronef est couramment équipé d'un harnais de maintien individuel d'un passager en station assis sur le siège. Le harnais comporte un jeu de sangles, couramment au nombre de quatre, dont au moins deux sangles d'épaule et deux sangles pelviennes. Les sangles sont ancrées sur le siège à l'une de leurs extrémités, accessoirement par l'intermédiaire d'enrouleurs et/ou de moyens de réglage de leur longueur, et sont chacune typiquement munies d'un organe d'attache à leur autre extrémité.

Les organes d'attache équipant les sangles coopèrent couramment avec des organes de verrouillage respectifs intégrés à un organe de blocage du harnais en position de bouclage du harnais autour du passager pour le retenir en station assis sur le siège.

L'organe de blocage comporte classiquement un actionneur manoeuvrable par le passager pour libérer au moins en partie les organes d'attache de l'emprise exercée sur eux par les organes de verrouillage, ce qui permet de rompre le bouclage du harnais autour du passager et d'autoriser son évacuation hors du siège.

Concernant l'organisation de tels harnais équipant les sièges d'aéronefs, on pourra par exemple se reporter au document FR2851974 (EADS SOGERMA SERVICES) qui décrit un tel harnais.

En deuxième lieu, les sièges d'aéronef sont organisés pour éviter, ou tout au moins limiter, leurs déformations sous l'effet des déformations d'un plancher de l'aéronef sur lequel est fixé le siège. De telles déformations du plancher sont notamment provoquées lors d'un crash de l'aéronef. A cet effet, l'architecture des sièges pour aéronef est organisée pour, en cas de crash, accompagner et/ou pour compenser des déformations du plancher sur lequel les sièges sont installés à bord de l'aéronef. De telles dispositions permettent de protéger les passagers en limitant l'impact des déformations du plancher sur un baquet du siège recevant le ou les passagers.

En troisième lieu, un siège d'aéronef est équipé d'un ou de plusieurs absorbeurs d'énergie aptes à absorber l'énergie induite par les efforts auxquels ledit baquet est globalement soumis en cas de forte décélération de l'aéronef. De tels absorbeurs d'énergie sont notamment des moyens déformables à un seuil d'effort prédéterminé.

Plus particulièrement il est à considérer une situation commune d'utilisation d'un siège pour aéronef selon laquelle le ou les passagers installés sur le siège ne subissent pas les effets d'une forte décélération de l'aéronef. Dans une telle situation, les absorbeurs d'énergie soutiennent en l'absence de déformation au moins l'assise du siège, voire la totalité du baquet du siège.

Dans une situation critique d'utilisation du siège, le ou les passagers installés sur le siège sont soumis à une forte décélération de l'aéronef. Sous l'effet de la charge subie par le baquet supportant la masse du ou des passagers, les absorbeurs d'énergie se déforment lorsqu'ils sont soumis à un effort supérieur audit seuil d'effort. Une variation de dimensions des moyens déformables des absorbeurs d'énergie, indifféremment en compression ou en élongation, autorise une mobilité au moins de l'assise voire de la totalité du baquet pour protéger le ou les passagers soumis à la forte décélération de l'aéronef. En fin de course de déformation des absorbeurs d'énergie, le baquet est retenu par les absorbeurs d'énergie au moins par l'intermédiaire de l'assise.

On pourra par exemple se reporter à ce propos aux documents FR2683191 (ISRAEL AIRCRAFT IND LTD), DE4312343 (EUROCOPTER DEUTSCHLAND), FR2950607 (EUROCOPTER FRANCE), US5125598 (R.G. FOX) et US20100270836 (G.A. MOWRY et al.), qui décrivent de tels absorbeurs d'énergie mettant en oeuvre des moyens déformables activables à un seuil d'effort prédéterminé subi par le baquet en cas de fortes décélérations.

Parmi les sièges pour aéronef, il est connu des sièges monoplaces, tels que ceux utilisés par les pilotes par exemple, et des banquettes dédiées à l'accueil de plusieurs passagers.

Pour ce qui est des banquettes, celles-ci sont bien évidemment munies de plusieurs harnais en nombre correspondant avec le nombre de passagers prévus selon la capacité optimale d'accueil en passagers de la banquette. Les emplacements respectifs d'implantation des harnais sur la banquette et/ou le nombre de dits organes de blocage du harnais en position de bouclage du harnais autour d'un passager, déterminent classiquement le nombre et les emplacements identifiant les places d'assise de la banquette pouvant respectivement accueillir des passagers.

Une banquette d'aéronef comporte couramment une structure porteuse soutenant une ossature. L'ossature ménage au moins un dit baquet composé d'une assise et d'un dossier recevant un ou plusieurs passagers. L'ossature est susceptible de ménager plusieurs baquets d'accueil individuel des passagers ou un baquet collectif pouvant accueillir conjointement plusieurs passagers.

La structure porteuse comporte classiquement un piètement typiquement muni de verrous pour sa fixation à un plancher de l'aéronef, notamment par boulonnage ou par coopération desdits verrous avec des rails intégrés au plancher de l'aéronef. Le piètement est porteur de l'ossature par l'intermédiaire d'éléments structurels de la structure porteuse reliant les piètements entre eux, tels que des éléments structurels formés de montants et/ou de longerons.

Le ou les absorbeurs d'énergie sont potentiellement intégrés à la structure porteuse, en étant par exemple interposés entre le piètement et lesdits éléments structurels. On pourra à ce propos se reporter par exemple aux documents EP0423348 (KIGUCHI SHIGERU et al.) et US5657950 (IND TECHNOLOGY RESEARCH INT. et al.).

Par exemple encore, le ou les absorbeurs d'énergie sont potentiellement interposés entre la structure porteuse et l'ossature. On pourra à ce propos se reporter par exemple aux documents EP0716980 (EUROCOPTER FRANCE), US5125598 (R.G. FOX) et US20100270836 (G.A. MOWRY et al.).

Concernant le document US20100270836 (G.A. MOWRY et al.), l'absorbeur d'énergie est plus particulièrement formé d'un ressort porté par l'assise et placé sous contrainte par l'intermédiaire d'un filin. Le filin est en prise sur le ressort à l'une de ses extrémités et sur l'ossature à l'autre de ses extrémités par l'intermédiaire d'une poulie autour de laquelle le filin est enroulé.

Un avantage des banquettes est de permettre l'accueil de plusieurs passagers avec une masse et un encombrement réduits de la banquette par rapport à plusieurs sièges recevant individuellement le même nombre de passagers. Cependant l'optimisation du nombre de passagers pouvant être accueillis par une banquette d'un encombrement le plus faible possible implique une restriction de l'espace disponible sur la banquette pour chacun des passagers, au détriment de leur confort individuel.

Dans ce contexte, il est constaté que la banquette peut être occupée par des passagers en nombre inférieur à celui de sa capacité d'accueil optimale. Cependant, les emplacements de la banquette réservés à chacun des passagers sont prédéterminés selon l'agencement de la banquette, dans le cadre des contraintes liées à la sécurisation des passagers installés sur la banquette en cas de forte décélération et/ou en cas de crash de l'aéronef.

Dans ces conditions, l'amélioration du confort individuel des passagers en nombre inférieur à la capacité globale d'accueil de la banquette est restreinte et mérite d'être développée. Il est à relever qu'une telle amélioration doit prendre en compte une recherche constante d'un allègement de la banquette permettant de réduire au mieux sa masse, ce qui est important en aéronautique, ainsi que, tel que précédemment visé, doit prendre en compte une sécurisation des passagers vis-à-vis d'une forte décélération de l'aéronef et/ou en cas de crash.

Dans le domaine général du transport de passagers à bord des véhicules, il a été proposé des banquettes recherchées légères, voire adaptables, pouvant accueillir un nombre variable de passagers.

Par exemple selon le document US7594701 (CONAX FLORIDA CORPORATION), une banquette d'aéronef comprend une structure porteuse munie de moyens de fixation conjointement au plancher et à une paroi de l'aéronef.

Selon ce document US7594701, la structure porteuse est habillée d'une toile ménageant une assise globale pour l'accueil de plusieurs passagers, ladite toile étant soutenue par un maillage de sangles pouvant être plus ou moins tendues sur la structure porteuse.

Par exemple encore selon le document EP2069164 (INDIANA MILLS & MFG), une banquette pour véhicule munie de ceintures de sécurité peut recevoir un nombre variable de passagers par déplacement, le long d'un rail implanté sur le siège, d'organes de verrouillage desdites ceintures en position de bouclage.

Toujours au regard du confort des utilisateurs de sièges, l'assise traditionnelle des sièges est monobloc et reçoit globalement le fessier des utilisateurs. Il a cependant été constaté que le confort des utilisateurs pouvait être amélioré en subdivisant l'assise d'un siège en deux assises élémentaires recevant respectivement l'une et l'autre des fesses de l'utilisateur.

On pourra se reporter à ce propos aux sièges décrits par les documents EP2200481 (MASSACHUSETTS INST TECHNOLOGY) et US2799323 (BERG JOSEPH) par exemple.

Selon les documents EP2200481 et US2799323, des assises élémentaires d'un siège sont individuellement mobiles sur elles-mêmes pour adapter leur orientation en fonction de la posture de l'utilisateur installé sur le siège, de sorte que les tensions musculaires subies par l'utilisateur sont limitées.

D'autres documents ont été considérés, à savoir la spécification « Airworthiness Standards: Normal Category Rotorcraft", 14CFR27.562, Title 14, Parts 27. 29 (2002) et les documents EP0433388, US2008211219, US2009267390 et US2013228652.

Dans ce contexte, le but de la présente invention est de proposer une banquette pour aéronef organisée pour l'accueil d'un nombre variable de passagers dans le cadre des contraintes d'une sécurisation des passagers transportés par un aéronef, notamment vis-à-vis d'une forte décélération de l'aéronef et/ou en cas de crash.

Il est plus particulièrement recherché par la présente invention de proposer une telle banquette pour aéronef dont l'organisation permet d'accueillir un nombre variable de passagers en améliorant significativement leur confort, notamment vis-à-vis de l'écart entre les passagers installés sur la banquette, lorsque les passagers sont en nombre moindre vis-à-vis du nombre optimal de places d'accueil des passagers sur la banquette.

La démarche de la présente invention est d'autant plus délicate à mener qu'il doit être considéré, compte tenu de la sécurisation des passagers devant être procurée, que les places disponibles sur la banquette doivent être prédéfinies et clairement identifiables par les passagers.

Il doit aussi être considéré la possible installation sur la banquette de passagers en nombre impair pour une banquette comportant un nombre optimal de places d'accueil des passagers en nombre pair, et vice versa. Une telle difficulté est d'autant plus délicate à surmonter dans le cas où le nombre de passagers installés sur la banquette est inférieur d'un seul passager au regard du nombre total de places d'accueil de la banquette.

Il ne doit aussi pas être perdu de vue qu'il est à éviter d'accroître la masse globale de la banquette et de complexifier sa structure outre mesure pour maintenir une obtention et une exploitation de la banquette à des coûts industriellement acceptables. Il est encore recherché dans ce contexte de procurer ledit accueil d'un nombre variable de passagers par la banquette en évitant de modifier l'agencement de la banquette en fonction du nombre de passagers temporairement accueillis.

Par ailleurs, il est souhaitable que les dispositions prévues pour améliorer le confort des passagers ne fassent pas obstacle à la possibilité de rabattre la ou les assises vers les dossiers, pour limiter l'encombrement de la banquette en l'absence de passagers.

Dans cet environnement technologique, il est proposé par la présente invention une banquette pour aéronef du type comportant classiquement une structure porteuse soutenant une ossature ménageant un baquet formé d'une assise et d'un dossier. Le baquet comporte une pluralité prédéfinie d'emplacements d'accueil individuel de passagers.

La structure porteuse comprend un piètement muni de verrous de fixation de la banquette en station d'utilisation. Une telle station d'utilisation de la banquette identifie typiquement l'une de ses dimensions d'extension en élévation depuis le piètement vers le dossier ainsi que, conformément à la posture d'un passager classiquement accueilli par la banquette, une zone avant et une zone arrière entre lesquelles s'étend l'assise, le dossier étant situé en zone arrière de la banquette.

La structure porteuse comprend encore des longerons, dont un longeron qualifié « avant » et situé à l'avant de la banquette en station d'utilisation et un longeron qualifié « arrière » et situé à l'arrière de la banquette en station d'utilisation. Ledit longeron avant et ledit longeron arrière sont chacun montés sur le piètement. L'ossature est montée pivotante sur la structure porteuse au moins par l'intermédiaire de l'assise montée pivotante sur le piètement par l'intermédiaire du longeron avant.

La banquette pour aéronef de la présente invention comporte aussi une pluralité de harnais en nombre correspondant au nombre optimal de passagers pouvant être accueillis simultanément par la banquette. Chaque harnais comporte au moins quatre sangles, dont deux sangles d'épaule et deux sangles pelviennes. Les sangles sont chacune ancrées sur la banquette à l'une de leurs extrémités et sont chacune verrouillables à leur extrémité opposée sur un organe de blocage en des points de verrouillages prédéfinis conformément à un bouclage d'un harnais autour d'un passager.

Plus particulièrement tel que classiquement, le verrouillage des sangles en position de bouclage d'un harnais autour d'un passager est réalisé par l'intermédiaire d'un organe de blocage comportant des points de verrouillage respectifs de chacune des sangles d'un harnais donné, exploité pour ceinturer un passager.

Tel que précédemment visé, un tel organe de blocage est courant et comporte notoirement des organes de verrouillage identifiant lesdits points de verrouillage et coopérant respectivement avec des organes d'attache équipant les sangles. Les mises en coopération respectives par un passager entre les organes d'attache et les organes de verrouillage sont au moins en partie aptes à être rompues sous l'effet de l'actionnement d'un organe de manoeuvre intégré à l'organe de blocage.

On relèvera que le nombre de harnais équipant une banquette d'aéronef, déterminant le nombre optimal de passagers pouvant être accueillis simultanément par la banquette tel que précédemment mentionné, est classiquement identifiable par le nombre des organes de blocage équipant la banquette.

La banquette pour aéronef de la présente invention comporte encore une pluralité d'absorbeurs d'énergie en prise sur l'ossature. Les absorbeurs d'énergie procurent une retenue au moins de l'assise en cas de forte décélération de l'aéronef à l'encontre des efforts subis par le baquet et générés par au moins un passager accueilli par la banquette. Les absorbeurs d'énergie peuvent être classiquement chacun agencés en organes déformables, c'est-à-dire sont chacun à modification de forme tel qu'en extension ou en compression par exemple, lorsque les efforts supportés par le baquet sont supérieurs à un seuil d'effort prédéfini.

Conformément à un tel environnement technologique, la banquette de la présente invention est principalement reconnaissable en ce qu'elle comporte les dispositions mentionnées ci-après.

L'assise est subdivisée suivant l'extension générale du longeron avant en une pluralité de plaques d'assise adjacentes. Les plaques d'assise sont notamment chacune résistantes en torsion et en flexion vis-à-vis d'un seuil de contraintes prédéfini. Deux plaques d'assise voisines ménagent conjointement un dit emplacement d'accueil individuel d'un passager par réception individuelle d'une fesse respective du passager.

En outre, les plaques d'assise sont chacune individuellement montées mobiles en pivotement sur la structure porteuse, en étant plus particulièrement chacune montées individuellement pivotantes sur le piètement à leur bord avant par l'intermédiaire du longeron avant. Les plaques d'assises sont aussi chacune individuellement soutenues en suspension à leur bord opposé arrière par au moins un dit absorbeur d'énergie. Lesdits absorbeurs d'énergie sont chacun affectés à une plaque d'assise en étant placés en prise sur la structure porteuse par exemple, mais tel que visé plus loin en étant de préférence placés en prise sur le dossier.

Par ailleurs, il est proposé de prendre en considération une répartition des sangles de chacun des harnais en deux jeux de sangles distincts comprenant chacun une sangle d'épaule et une sangle pelvienne, chaque jeu de sangles étant affecté au ceinturage d'un passager respectivement à l'un et l'autre de ses côtés.

Conformément à la prise en compte d'une telle répartition des sangles de chacun des harnais, les sangles d'un jeu de sangles qualifié de médian et placé en adjacence entre deux quelconques jeux de sangles qualifiés de voisins, sont conjointement verrouillables sur un même organe de blocage, sélectivement avec l'un ou l'autre desdits jeux de sangles voisins par l'intermédiaire de combinaisons respectives de points de verrouillage de l'organe de blocage identifiées selon la position relative l'un par rapport à l'autre des jeux de sangles coopérant avec un même organe de blocage.

Dans ce contexte, les différents jeux de sangles sont coopérants deux à deux avec un même organe de blocage selon les emplacements d'accueil choisis par les passagers et comprenant chacun deux plaques d'assise adjacentes.

Trois plaques d'assise successivement adjacentes identifient deux à deux un nombre d'emplacements d'accueil égal à deux. En outre trois jeux de sangles successivement adjacents et respectivement affectés deux à deux au ceinturage d'un passager à l'un de ses côtés, sont aptes à ceinturer un passager quelles que soient l'emplacement d'accueil choisi par le passager exploitant deux quelconques plaques d'assise adjacentes.

On relèvera que l'agencement et l'implantation sur la banquette des harnais contraignent naturellement le passager à utiliser un emplacement de la banquette formé de deux quelconques plaques d'assise voisines.

Par ailleurs, la conformation plane des plaques d'assise et une faible distance de séparation entre deux plaques d'assise voisines ménage un plan sensiblement continu de l'assise de la banquette en procurant un confort d'assise au passager quelles que soient les deux plaques d'assise adjacentes qu'il utilise.

Il ressort de ces dispositions qu'un nombre N₁ pair de plaques d'assise équipant la banquette détermine un nombre N₂ de premiers emplacements d'accueil de passagers, N₂ étant égal à N₁ / 2 et identifiant le nombre optimal de passagers pouvant être accueillis simultanément sur la banquette. Ledit nombre N2 correspond en outre au nombre optimal de harnais pouvant être simultanément utilisés par les passagers, ledit nombre N2 étant notamment repérable par le nombre d'organes de blocage des harnais équipant la banquette.

En outre, un nombre N₃ de deuxièmes emplacements d'accueil de passagers est défini par exploitation de deux plaques d'assises voisines par ailleurs respectivement participantes de deux dits premiers emplacements d'accueil voisins.

Il ressort finalement de ces dispositions que la banquette comporte un nombre optimisé N₄ d'emplacements d'accueil de structure distincte pouvant être sélectivement utilisés par les passagers, ledit nombre N₄ étant supérieur audit nombre N₂ de premiers emplacements d'accueil. Il peut notamment être considéré :
- ) une première configuration d'accueil des passagers selon laquelle la banquette accueille des passagers en un dit nombre N₂ optimal, les passagers étant placés côte-à-côte en utilisant l'ensemble des plaques d'assise et l'ensemble des jeux de sangles des harnais.
- ) une deuxième configuration d'accueil des passagers selon laquelle la banquette accueille des passagers en un dit nombre N₃ inférieur au nombre N₂, les passagers pouvant utiliser au besoin deux quelconques plaques d'assise voisines et deux jeux de sangles adjacents coopérants avec un même organe de blocage pour ceinturer conjointement un même passager. Selon cette deuxième configuration d'accueil, un espace de confort est alors ménagé entre deux passagers voisins séparés l'un de l'autre par une plaque d'assise inutilisée.

Ledit espace de confort est en outre avantageusement procuré :
- ) sans affecter la sécurité des passagers installés sur la banquette, quel que soit leur nombre, les plaques d'assise étant chacune individuellement soutenues en suspension par des absorbeurs d'énergie qui leur sont propres et les passagers pouvant être ceinturés par quatre sangles, dont deux sangles d'épaule et deux sangles pelviennes, quel que soit le ou les emplacements d'accueil de la banquette les accueillant respectivement,
- ) sans être soumis à une contrainte de modification de la configuration et/ou de l'agencement de la banquette entre ledit premier cas d'accueil des passagers et ledit deuxième cas d'accueil des passagers susvisés.

Plus particulièrement les passagers installés sur la banquette en un quelconque nombre n'excédant bien évidement pas ledit nombre N₂ correspondant au nombre optimal d'emplacements d'accueil de la banquette, peuvent librement s'installer sur un quelconque emplacement d'accueil de la banquette défini par deux plaques d'assise voisines, sans intervention particulière sur un quelconque organe de la banquette modifiant son agencement et/ou sa configuration, sinon tel que couramment par la mise en coopération entre deux jeux de sangles voisins dont les sangles sont verrouillées sur un même organe de blocage pour boucler un harnais autour du passager.
- ) sans avoir complexifié outre mesure la structure de la banquette, avec pour avantage de rendre son coût d'obtention industriellement et commercialement acceptable, ni sans avoir accru significativement sa masse.

On relèvera encore que la conformation globalement plane de la totalité de l'assise de la banquette procure classiquement un gain d'encombrement de la banquette.

Cependant les dispositions de l'invention permettent un tel gain d'encombrement tout en procurant une protection individualisée des passagers, y compris en cas de forte décélération de l'aéronef provoquant une déformation individualisée des absorbeurs d'énergie soutenant respectivement les plaques d'assises. La déformation individualisée des absorbeurs d'énergie est provoquée selon la masse propre du passager utilisant les plaques d'assise soutenues par les absorbeurs d'énergie qui leur sont affectés.

Selon un choix astucieux, les organes de blocage sont du type comprenant chacun un jeu de cinq points de verrouillage, dont :
- ) un point de verrouillage, qualifié de « permanent », bloquant en permanence sur l'organe de blocage l'une des sangles, sangle pelvienne de préférence, d'un quelconque jeu de sangles qualifié de premier, et
- ) quatre points de verrouillage qualifiés de « temporaires », bloquant temporairement sur l'organe de blocage, en position de bouclage d'un harnais autour d'un passager, l'autre sangle du premier jeu de sangles et les sangles d'un quelconque jeu de sangles adjacent au premier jeu de sangles, sélectivement par jeux variables de trois points de verrouillage temporaires respectivement identifiés selon la position relative des jeux de sangles ceinturant le passager.

Le passager peut utiliser deux quelconques jeux de sangles adjacents pour son ceinturage par un harnais quelles que soient les deux plaques d'assise adjacentes qu'il utilise, conformément à ses habitudes par blocage des sangles sur les points de verrouillage temporaires appropriés de l'organe de blocage.

On relèvera le caractère inhabituel d'exploiter un organe de blocage à cinq points de verrouillage comprenant classiquement un point de verrouillage permanent et quatre points de verrouillage temporaires, pour bloquer au plus quatre sangles composant un harnais de ceinturage d'un passager en station assis sur la banquette, par exploitation sélective des points de verrouillage temporaires selon l'emplacement d'accueil choisi par le passager. En effet, un tel organe de blocage à cinq organes de verrouillage est connu en lui-même pour bloquer classiquement les sangles d'un harnais comportant cinq sangles, dont quatre sangles temporairement bloquées sur les points de verrouillage temporaires et une sangle, couramment d'entrejambe, verrouillée en permanence sur l'organe de blocage.

Tel que couramment concernant les harnais équipant les sièges des aéronefs, le verrouillage permanent d'une sangle d'un harnais permet de maintenir en permanence l'organe de blocage en prise sur la banquette pour éviter sa séparation vis-à-vis de la banquette.

L'exploitation sélective par le passager des jeux de sangles nécessaires à son ceinturage est rendue possible par un simple déplacement de l'organe de blocage utilisé par le passager. Un tel déplacement de l'organe de blocage est opéré par le passager par exploitation de la flexibilité de la sangle verrouillée en permanence sur l'organe de blocage, et par retournement de l'organe de blocage permettant de placer en position adéquate les points de verrouillage selon les jeux de sangles sélectivement utilisés par le passager.

Selon une approche générale de l'invention, les absorbeurs d'énergie sont potentiellement individuellement déformables, tel que par exemple indifféremment en extension ou en compression, tel que classiquement selon l'organisation structurelle et/ou les modalités de mise en prise des absorbeurs d'énergie respectivement sur les plaques d'assise et sur la structure porteuse ou sur le dossier.

Dans ce contexte, il est compris que les absorbeurs d'énergie peuvent être d'un quelconque agencement connu, tel qu'agencé en vérin, en ressort de compression et/ou en organe comportant une masse déformable par exemple, la faculté de déformation de ladite masse déformable pouvant indifféremment résulter de sa matière et/ou de sa conformation.

Il est cependant préféré de restreindre au mieux l'encombrement et/ou la masse des absorbeurs d'énergie, en raison notamment de leur nombre conséquents équipant la banquette par suite du soutien de chacune des plaques d'assise par au moins un absorbeur d'énergie.

Selon une forme préférée de réalisation, les absorbeurs d'énergie comprennent chacun un filin refermé en boucle sur lui-même en étant notamment résistant à l'encontre de sa déformation indifféremment en extension et/ou en compression sous l'effet de la mise en oeuvre de l'absorbeur d'énergie.

Dans ce contexte, il est compris que le filin est résistant à l'encontre de sa déformation intrinsèque en extension et/ou en compression, tel qu'un filin issu d'un matériau métallique par exemple. En d'autres termes, les caractéristiques du filin formant un absorbeur d'énergie donné, notamment au regard du matériau dont il est issu et/ou au regard de ses dimensions et/ou de sa conformation, lui confèrent une résistance intrinsèque à l'encontre de sa déformation en extension et/ou en compression.

Bien entendu, ladite résistance intrinsèque du filin est à considérer lorsque le filin est soumis à un effort au moins inférieur ou égal, voire légèrement supérieur, aux efforts maximum potentiellement supportés par le filin sous l'effet de la mise en oeuvre de l'absorbeur d'énergie en cas de forte décélération de l'aéronef. En d'autres termes, ladite résistance intrinsèque du filin lui confère une résistance à la déformation en extension et/ou en compression sous l'effet de la mise en oeuvre de l'absorbeur d'énergie par suite des efforts supportés par le baquet en cas de forte décélération de l'aéronef.

Dans ce contexte, le filin est enroulé étroitement entre les extrémités de ladite boucle formée par le filin autour d'une poulie montée tournante sur un palier fixé au dossier. L'une des extrémités de la boucle, dite proximale, est fixée à une plaque d'assise affectée au filin. L'autre extrémité de la boucle, dite distale, est libre en étant disposée en surplomb de la poulie en l'absence d'efforts supportés par le filin inférieurs audit seuil d'effort déterminant la mise en oeuvre de l'absorbeur d'énergie.

Par ailleurs, le filin est muni d'un moyen de retenue de l'extrémité distale de la boucle contre la poulie en fin de course du filin provoquée par la mise en oeuvre de l'absorbeur d'énergie par suite des efforts supportés par la plaque d'assise en cas de forte décélération de l'aéronef.

On relèvera la simplicité structurelle avantageuse des absorbeurs d'énergie agencés chacun en filin conformé en boucle, permettant d'une part une fixation aisée par crochetage des absorbeurs d'énergie sur les plaques d'assise et d'autre part une mise en prise des filins par enroulement étroit autour de la poulie montée librement tournante sur le dossier.

Par ailleurs, on relèvera aussi que la conformation en boucle d'un filin formant un absorbeur d'énergie donné induit un enroulement à au moins une spire de deux brins du filin autour de la poulie. Lesdits deux brins du filin travaillent conjointement lors de la mise en oeuvre de l'absorbeur d'énergie en équilibrant les efforts supportés par la poulie suivant son axe de rotation sous l'effet des circulations respectives desdits brins autour de la poulie.

Lorsque les efforts supportés par une plaque d'assise donnée sont supérieurs audit seuil d'effort prédéfini, le filin circule autour de la poulie en arc-boutement, en se déformant successivement par pliage puis détente, une telle déformation du filin procurant l'absorption d'énergie recherchée jusqu'à la mise en butée du filin contre la poulie par l'intermédiaire dudit moyen de retenue.

A l'issue de l'absorption d'énergie procurée par la circulation du filin autour de la poulie, la mise en butée du filin contre la poulie procurée par ledit moyen de retenue permet de retenir la plaque d'assise à l'encontre de son basculement provoqué vers le bas et l'arrière de la banquette sous l'effet des efforts supportés par la plaque d'assise sur laquelle est installé un passager.

Une telle retenue de la plaque d'assise interdit sa désolidarisation de la banquette à son bord arrière par suite de la mise en oeuvre de l'absorbeur d'énergie.

Selon une forme astucieuse de réalisation, la conformation en boucle du filin est mise à profit pour former ledit moyen de retenue. Plus particulièrement, ledit moyen de retenue est formé par un enroulement du filin autour de la poulie par l'intermédiaire d'un noeud connu sous le nom de « noeud d'alouette » (cow hitch en langue anglaise), un tel noeud d'alouette se refermant autour de la poulie à l'extrémité distale de la boucle en fin de course du filin provoquée par suite de la mise en oeuvre de l'absorbeur d'énergie.

Dans ces conditions, les absorbeurs d'énergie sont notamment exempts de moyens élastiquement déformables en extension et/ou en compression souvent coûteux, encombrants et massifs. En effet, l'agencement individuel des absorbeurs d'énergie proposés par la présente invention permet de limiter l'accroissement de la masse de la banquette munie pour chacun des emplacements d'accueil d'au moins deux absorbeurs d'énergie respectivement affectés au soutien de deux plaques d'assise adjacentes ménageant conjointement un même emplacement d'accueil.

On relèvera que chacune des plaques d'assise est susceptible d'être individuellement soutenue par un absorbeur d'énergie unique. Cependant il est préféré une forme de réalisation selon laquelle chaque plaque d'assise est soutenue par au moins deux absorbeurs d'énergie, notamment placés en prise distante l'un de l'autre au voisinage des extrémités respectives du bord arrière d'une plaque d'assise donnée.

De telles dispositions procurent un maintien stable de la plaque d'assise dans son plan général maintenu orienté parallèlement au longeron avant, et cela quelle que soit la posture prise par le passager appliquant potentiellement des charges différentes respectivement sur l'une et l'autre des plaques d'assise sur lesquelles le passager a conjointement pris place.

Selon une forme de réalisation de la banquette, le piètement comprend classiquement au moins deux pieds munis chacun d'au moins un verrou de fixation de la banquette en station d'utilisation. Les pieds sont conjointement porteurs du longeron avant et du longeron arrière et comportent chacun au moins un jambage avant et au moins un jambage arrière. Dans ce contexte, lesdits jambages arrière s'étendent avantageusement en élévation vers le sommet du dossier et sont conjointement porteurs d'au moins un longeron complémentaire intégré au dossier.

Les sangles d'épaule de l'ensemble des harnais sont de préférence chacune en prise sur des enrouleurs individuels montés sur le dossier.

En outre, lesdits jambages arrière sont de préférence conjointement porteurs d'un longeron annexe surplombant les enrouleurs. Le longeron annexe permet de guider les sangles d'épaule depuis le dossier vers l'avant de la banquette, le longeron arrière guidant les sangles pelviennes depuis le dossier vers l'avant de la banquette.

Dans ce contexte, le longeron arrière, le longeron complémentaire et le longeron annexe constituent avantageusement des organes de reprise des efforts supportés par la banquette.

Plus particulièrement, le longeron arrière supporte le dossier à sa base et reprend les efforts transmis au baquet par les sangles pelviennes et par le piètement. Le longeron complémentaire et le longeron annexe reprennent les efforts transmis au baquet par les enrouleurs et par les sangles d'épaule, ainsi que transmis par les absorbeurs d'énergie et le piètement.

Selon une forme de réalisation de la banquette, le longeron avant et le longeron arrière sont reliés entre eux par des traverses en ménageant un ensemble de basculement global de l'assise vers le dossier. Dans ce contexte, le longeron avant est assemblé au piètement par des moyens de fixation réversible, tel que par brochage par exemple, autorisant une séparation ou alternativement une jonction rapides et aisées du longeron avant vis-à-vis du piètement.

L'assise est globalement rabattable vers le dossier malgré sa subdivision en une pluralité de plaques d'assises montées individuellement pivotantes sur le longeron avant, par séparation du longeron avant vis-à-vis du piètement et par pivotement de l'assise autour du longeron arrière par l'intermédiaire des traverses.

Ces dispositions sont telles que lorsque la banquette est inutilisée, l'assise peut être rabattue contre le dossier pour limiter l'encombrement hors tout de la banquette et ainsi libérer de l'espace disponible à bord de l'aéronef.

On relèvera que les plaques d'assise étant individuellement soutenues par les absorbeurs d'énergie déformables, tels qu'avantageusement agencés en filin enroulé autour de ladite poulie, la sécurisation des passagers procurée par les absorbeurs d'énergie ne fait pas obstacle au rabat global de l'assise vers le dossier par pivotement des traverses autour du longeron arrière.

Il est en cela à noter que le passage de l'assise entre la position basculée vers le dossier et la position en situation d'utilisation de la banquette par un ou plusieurs passagers est possible sans modifier structurellement la banquette, et cela malgré la mise en prise des absorbeurs d'énergie conjointement sur les plaques d'assise et sur le dossier.

Selon une forme de réalisation, le longeron avant et les jambages avant sont montés en pivotement relatif l'un par rapport aux autres. Les jambages avant sont assemblés à des semelles respectives des pieds par l'intermédiaire des moyens de fixation réversible. Lesdites semelles sont classiquement équipées des verrous de fixation de la banquette en station d'utilisation. En outre, la banquette est de préférence contreventée entre l'avant et l'arrière par l'intermédiaire du piètement. A cet effet, les jambages avant et les jambages arrière comprennent des béquilles reliant aux semelles respectivement le longeron avant et le longeron arrière.

Pour faciliter la compréhension rapide par les passagers des divers choix d'emplacements d'accueil qui leurs sont offerts sur la banquette, au moins le dossier comporte avantageusement un repère visuel identifiant les emplacements d'accueil individuel des passagers. Lesdits emplacements d'accueil sont individuellement identifiés par un marquage formant au moins en partie le repère visuel, ledit marquage repérant visuellement un groupe de deux plaques d'assise voisines et cela pour tous les groupes possibles de deux plaques d'assise voisines exploitables par un passager pour s'installer sur la banquette.

Par exemple, le repère visuel comprend un marquage composé d'au moins un jeu de bandes séparant visuellement des emplacements d'accueil de la banquette respectivement situés de part et d'autre des bandes et comportant chacun un premier groupe de deux plaques d'assise voisines et distinctes de l'un à l'autre desdits emplacements d'accueil situés de part et d'autre des bandes.

En outre, au moins une bande du jeu de bandes pointe visuellement une zone d'adjacence entre deux plaques d'assises voisines d'un deuxième groupe formant un emplacement d'accueil, les plaques d'assises du deuxième groupe comprenant une plaque d'assise de chacun des premiers groupes.

Un exemple préféré de réalisation de la présente invention va être décrit en relation avec les figures des planches annexées, dans lesquelles :
- les fig.1 et fig.2 sont des illustrations en perspective d'une forme préférée de réalisation d'une banquette conforme à la présente invention, respectivement vue de l'avant et vue de l'arrière de la banquette,
- les fig.3 et fig.4 sont des illustrations de face de la banquette représentée sur les fig.1 et fig.2, la banquette recevant un nombre optimal de passagers sur la fig.3 et un nombre moindre de passagers sur la fig.4.
- les fig.5 et fig.6 sont des détails de la banquette illustrée sur les fig.1 à fig.4, illustrant un organe de blocage d'un harnais équipant la banquette en des positions respectives d'utilisation selon les emplacements de la banquette accueillant les passagers.
- les fig.7 et fig.8 sont des détails de la banquette illustrée sur les fig.1 à fig.4, illustrant des absorbeurs d'énergie équipant la banquette respectivement en position commune d'utilisation de la banquette sur la fig.7 et en position de protection des passagers sur la fig.8.
- les fig.9 et fig.10 sont des représentations de côté de la banquette illustrée sur les fig.1 à fig.4, respectivement en position commune d'utilisation de la banquette sur la fig.9 et en position de protection des passagers sur la fig.10.
- les fig.11 et fig.12 sont des illustrations en perspective vue de l'avant de la banquette illustrée sur les fig.1 à fig.4, respectivement en position commune d'utilisation sur la fig.11 et en position de rabat d'une assise vers un dossier de la banquette sur la fig.12.

Pour clarifier et rendre aisée la lecture de la description qui va être faite de la banquette en relation avec les figures, les organes communs de la banquette représentés sur les différentes figures sont respectivement identifiés avec les mêmes numéros et/ou lettres de référence, sans impliquer leur représentation individuelle sur chacune des figures et/ou la mention sur les figures des numéros et/ou lettres de référence les identifiant, notamment en raison de leur masquage par un ou plusieurs autres organes de la banquette et/ou pour éviter une surcharge des figures affectant leur lisibilité.

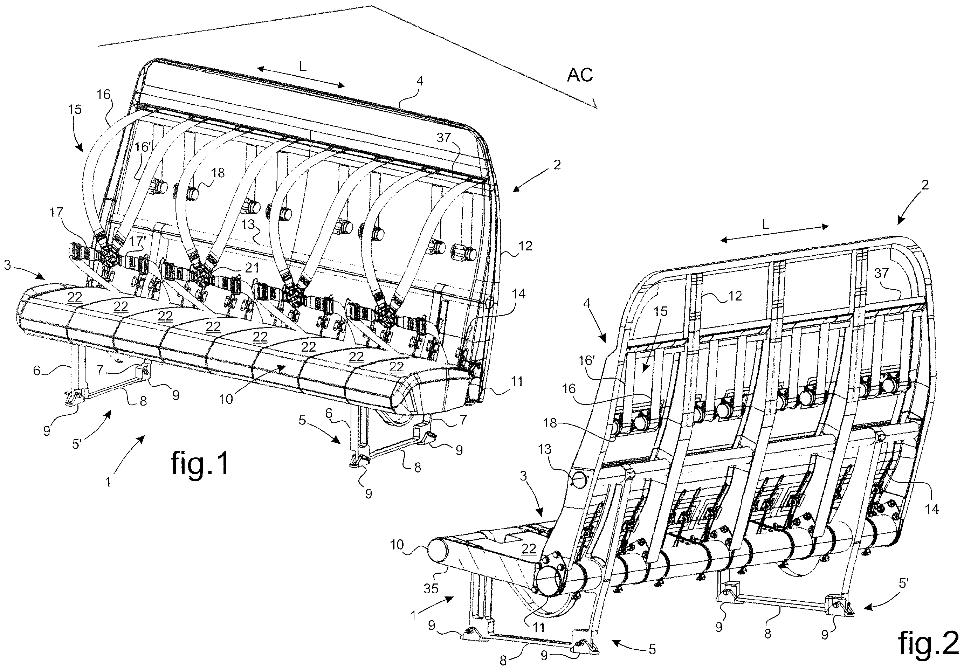

Sur la fig.1, la référence AC désigne un aéronef conforme à l'invention. Sur les fig.1 et fig.2, une banquette d'aéronef conforme à la présente invention est illustrée respectivement vue de l'avant et vue de l'arrière de la banquette. Les notions « avant » et « arrière » sont typiquement identifiées par rapport à l'orientation d'un passager installé sur la banquette en station d'utilisation.

La banquette comporte une structure porteuse 1 soutenant une ossature 2 ménageant un baquet formé d'une assise 3 et d'un dossier 4 orientés en dièdre l'un par rapport à l'autre. Le baquet 3,4 est longitudinalement étendu suivant une orientation longitudinale L d'extension de la banquette pour pouvoir recevoir simultanément une pluralité de passagers placés côte à côte.

La structure porteuse 1 comprend un piètement 5,5' comprenant deux pieds 5 et 5' longitudinalement distants l'un de l'autre. Chaque pied 5,5' comporte un jambage avant 6 et un jambage arrière 7 reliés l'un à l'autre à leur base par une semelle 8 munie de verrous 9 de fixation de la banquette en station d'utilisation sur un plancher de l'aéronef AC. La structure porteuse 1 comprend aussi des longerons portés par le piètement 5,5' en étant orientés parallèlement suivant l'orientation longitudinale L d'extension de la banquette. Les longerons portés par le piètement 5,5' comprennent un longeron avant 10 porté par les jambages avant 6 et un longeron arrière 11 porté par les jambages arrière 7.

L'ossature 2 est montée sur la structure porteuse 1 par l'intermédiaire du longeron avant 10, du longeron arrière 11 et de prolongements des jambages arrière 7 s'étendant en élévation vers le sommet du dossier 4. Le dossier 4 ménagé par l'ossature 2 est monté sur le longeron arrière 11 par l'intermédiaire de montants 12 intégrés au dossier et par l'intermédiaire des prolongements des jambages arrière 7 conjointement porteurs d'un longeron complémentaire 13 intégré au dossier 4.

L'assise 3 ménagée par l'ossature 2 est montée pivotante sur le longeron avant 10 à son bord avant longitudinalement étendu. L'assise 3 est par ailleurs soutenue en suspension par des absorbeurs d'énergie 14 placés en prise d'une part au bord arrière longitudinalement étendu de l'assise 3 et d'autre part au dossier 4 en surplomb du longeron arrière 11. Classiquement, les absorbeurs d'énergie 14 procurent une retenue de l'assise 3 à l'encontre des efforts subis par le baquet 3,4 et générés par au moins un passager accueilli par la banquette. Les absorbeurs d'énergie 14 sont chacun déformables par suite des efforts supportés par le baquet 3,4 supérieurs à un seuil d'effort prédéfini.

Par ailleurs, la banquette est équipée d'une pluralité de harnais 15 en nombre correspondant au nombre optimal de passagers pouvant être accueillis simultanément par la banquette. Chaque harnais 15 comporte quatre sangles, dont deux sangles d'épaule 16,16' et deux sangles pelviennes 17,17', ainsi qu'un organe de blocage 21 des sangles 16,16', 17,17' les verrouillant en position de bouclage du harnais 15 autour d'un passager.

Le nombre total de harnais 15 équipant la banquette, associant simultanément quatre sangles 16,16', 17,17' et un organe de blocage 21, définit le nombre optimal d'emplacement d'accueil des passagers sur la banquette, tel qu'au nombre de quatre sur l'exemple de réalisation de la banquette illustrée.

On notera à ce stade de la description une répartition des sangles 16,16' ; 17,17' de chacun des harnais 15 en deux jeux de sangles distincts 16,17 et 16',17' comprenant chacun une sangle d'épaule 16,16' et une sangle pelvienne 17,17', lesdits jeux de sangles étant respectivement affectés au bouclage d'un même passager à l'un de ses côtés. Les sangles 16,17,16',17' de chacun des harnais 15 sont chacune individuellement ancrées sur la banquette à l'une de leurs extrémités, dite distale. Les sangles d'épaules 16,16' de chacun des harnais 15 sont de préférence ancrées sur la banquette par l'intermédiaire d'enrouleurs 18 montés sur le dossier 4, en étant renvoyées depuis les enrouleurs 18 vers l'avant de la banquette par l'intermédiaire d'un longeron annexe 37 intégré au dossier 4.

Sur la fig.1 plus particulièrement, l'assise 3 est subdivisée en une pluralité de plaques d'assise 22 adjacentes suivant l'orientation d'extension longitudinale de la banquette. Les plaques d'assise 22 sont chacune individuellement montées pivotantes sur le piètement 5,5' à leur bord avant par l'intermédiaire du longeron avant 10. Les plaques d'assise 22 sont aussi individuellement soutenues en suspension à leur bord opposé arrière par les absorbeurs d'énergie 14. Les absorbeurs d'énergie 14 sont chacun affectés, de préférence par couple, à une plaque d'assise 22 donnée.

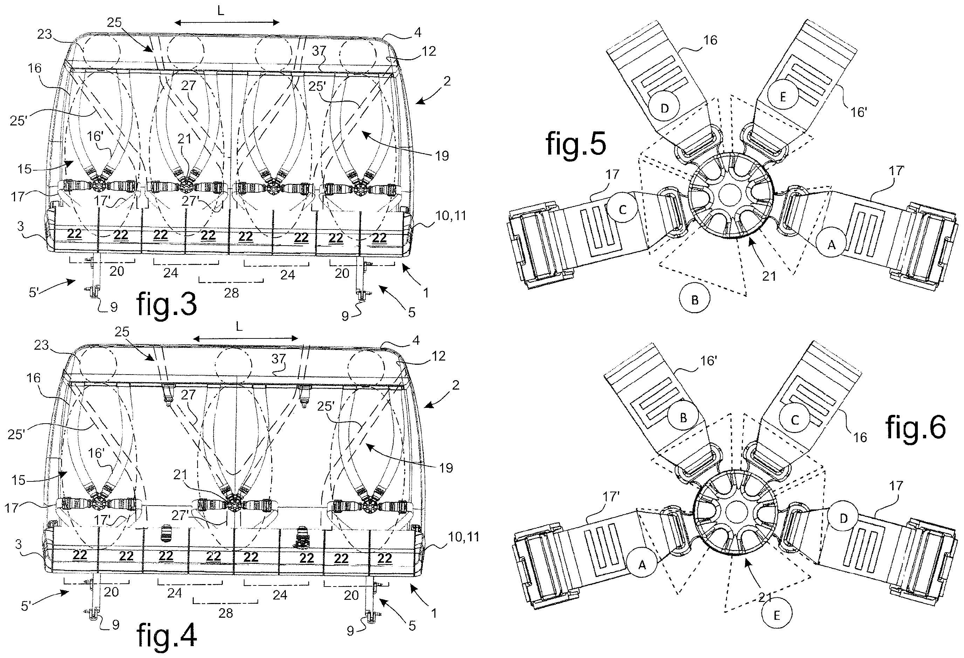

En se reportant par ailleurs aux fig.3 et fig.4, les emplacements d'accueil individuels des passagers 23 de l'aéronef AC sur la banquette sont chacun définis par deux plaques d'assises 22 voisines recevant une fesse respective du passager 23. Sur l'exemple de réalisation de la banquette illustrée, les plaques d'assise 22 sont en nombre N₁ pair égal à 8. Le nombre N₁ de plaques d'assise 22 définit un nombre N₂ optimal de passagers 23 aptes à être accueillis par la banquette, le nombre N₂ étant égal à N₁ / 2 soit quatre passagers 23 tel que représenté sur une première configuration d'accueil des passagers 23 sur la banquette illustrée sur la fig.3.

Cependant, la subdivision de l'assise 3 en plaques d'assise 22 définissant deux à deux un emplacement d'accueil d'un passager 23 rend possible une installation de plusieurs passagers 23 sur la banquette selon une deuxième configuration d'accueil des passagers 23 sur la banquette. Selon cette deuxième configuration d'accueil, les passagers 23 sont en un nombre N₃ impair égal à trois, tel que représenté sur la fig.4.

Selon la deuxième configuration d'accueil des passagers 23 sur la banquette, les passagers 23 sont éloignés l'un de l'autre d'une distance équivalente à une plaque d'assise 22, ce qui permet de procurer un confort spatial aux passagers 23 à leurs côtés.

Un tel confort spatial est procuré sans modification structurelle de la banquette susceptible de nécessiter une intervention spécifique des passagers 23 sur un organe de la banquette, autre que l'intervention habituelle du ceinturage des passagers par un harnais 15 par verrouillage des sangles 16,16',17,17' sur l'organe de blocage 21.

Pour faciliter le guidage spontané des passagers 23 vers l'un ou l'autre des emplacements d'accueil de la banquette définis selon la configuration d'accueil choisie par le ou les passagers 23, le dossier 4 de la banquette comporte un repère visuel 19 identifiant chacun des emplacements d'accueil définis par la banquette.

Le repère visuel 19 comprend notamment un marquage comportant des bandes 25,25' repérant visuellement un groupe de deux plaques d'assise 22 voisines et cela pour tous les groupes possibles de deux plaques d'assise 22 voisines. Sur l'exemple de réalisation du repère visuel 19 illustré, le marquage comporte deux bandes d'extrémité 25' ménagées aux extrémités longitudinales respectives du dossier 4 et une bande médiane 25.

Les bandes d'extrémité 25' sont agencées en segment brisé, lesdits segments brisés identifiant, respectivement avec l'un et l'autre des bords respectifs d'extrémité longitudinale de la banquette, des emplacements d'accueil d'un passager 23 dits emplacements d'accueil d'extrémité 20. La bande médiane 25 est agencée en Y, dont les banches supérieures 27 définissent avec les bandes d'extrémité 25' deux emplacements d'accueil 24 d'un passager 23 respectivement adjacents avec les emplacements d'accueil d'extrémité 20.

La branche inférieure 27' de la bande médiane 25 pointe visuellement un emplacement d'accueil 28 d'un passager 23 ménagé en zone médiane de la banquette en étant séparé de chacun des emplacements d'accueil d'extrémité 20 par une plaque d'assise 22.

Cependant il se pose alors le problème du ceinturage individuel des passagers 23 par un harnais 15. En effet, le ceinturage individuel des passagers 23 doit être procuré pour la totalité des passagers 23 installés sur la banquette, et cela quelle que soit les première ou deuxième configurations d'accueil des passagers 23 par la banquette.

Selon la première configuration d'accueil illustrée sur la fig.3, les passagers 23 en nombre N₂ peuvent être individuellement ceinturés par un harnais 15 en exploitant l'ensemble desdits jeux de sangles (16,17) ; (16',17') composant deux à deux un harnais 15 donné.

Selon la deuxième configuration d'accueil illustrée sur la fig.4, les passagers 23 en nombre N₃ peuvent être individuellement ceinturés en exploitant au besoin deux jeux de sangles (16,17) ; (16',17') adjacents et respectifs à deux harnais 15 voisins utilisés selon la première configuration d'accueil.

Plus particulièrement sur la fig.4, deux passagers 23 installés aux extrémités longitudinales respectives de la banquette exploitent chacun deux harnais 15 conformément à la première configuration d'accueil. Un passager 23 installé en zone médiane de la banquette exploite les jeux de sangles (16,17) ; (16',17') adjacents de deux harnais 15 voisins exploitables selon la première configuration d'accueil et l'organe de blocage 21 de l'un quelconque desdits deux harnais 15 voisins.

A cet effet, dans un aéronef AC, des harnais 15 sont représentés sur les fig.5 et fig.6, avec l'organe de blocage 21 de chacun des harnais 15 qui est un organe de blocage 21 à cinq points de verrouillage A,B,C,D,E respectivement schématisées par des polygones en traits interrompus globalement chacun conformés en triangle.

Un point de verrouillage permanent A bloque en permanence une sangle pelvienne 17' d'un harnais 15, qualifié de « premier ». Quatre organes de verrouillage temporaires B,C,D,E sont alors sélectivement exploités pour ceinturer un passager, par jeux variables de trois organes de verrouillage temporaires B,C,D,E selon notamment les modalités potentielles suivantes :
- ) soit par verrouillage temporaire des autres sangles 17,16,16' du premier harnais 15, tel qu'illustré sur la fig.5 en exploitant les points de verrouillage C,D,E de l'organe de blocage 21. Les harnais 15 sont dans ce cas exploitables pour l'ensemble des emplacements d'accueil 20,24 définis selon ladite première configuration d'accueil ou pour les emplacements d'accueil d'extrémité 20 définis selon ladite deuxième configuration d'accueil,
- ) soit par verrouillage temporaire de la sangle d'épaule 16' du jeu de sangle 16',17' du premier harnais 15, dont la sangle pelvienne 17' est en verrouillage permanent avec l'organe de blocage 21, et par verrouillage temporaire sur l'organe de blocage 21 des sangles 17,16 du jeu de sangles adjacent audit premier harnais 15 tel qu'illustré sur la fig.6. Dans ce cas, des harnais 15 médians placés entre les harnais 15 d'extrémité exploités pour lesdits emplacements d'accueil d'extrémité 20, sont utilisés par moitié pour ceinturer le passager 23 installé sur la banquette sur un emplacement d'accueil médian 28, conformément à une utilisation de la banquette selon ladite deuxième configuration d'accueil.

Bien entendu, de telles configurations d'accueil sont citées à titre d'exemples principaux, la modularité de la banquette vis-à-vis de différentes configurations d'accueil des passagers permettant d'autres combinaisons possibles d'exploitation de deux plaques d'assise voisines par les passagers.

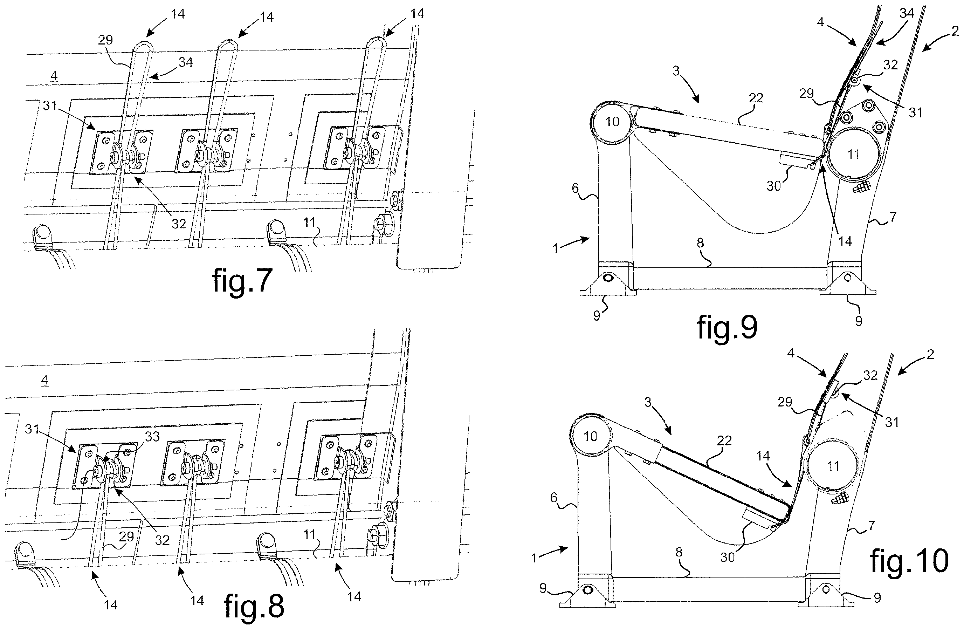

Sur les fig.7 à fig.10, les absorbeurs d'énergie 14 sont formés chacun d'un filin 29 refermé en boucle sur lui-même. Le filin 29 est placé en prise d'une part à son extrémité proximale par crochetage de la boucle sur un crochet 30 (visible fig.9, fig.10) équipant le bord arrière d'une plaque d'assise 22 donnée et d'autre part sur le dossier 4 par l'intermédiaire d'une poulie 32 montée librement tournante sur un palier 31 soutenu par le dossier 4, autour de laquelle poulie 32 le filin 29 est étroitement enroulé.

Sur les fig.7 et fig.9, la banquette est dans une position commune d'utilisation en l'absence d'une forte décélération de l'aéronef AC. Sur les fig.8 et fig.10, la banquette est dans une situation de protection des passagers 23 par suite d'une forte décélération de l'aéronef AC provoquant l'actionnement des absorbeurs d'énergie 14 en prise sur les plaques d'assise 22 occupées par le ou les passagers.

Plus particulièrement sur les fig.7 et fig.9, l'enroulement du filin autour de la poulie 32 bloque le filin 29 dans une position prédéfinie procurant une retenue de la plaque d'assise 22 en l'absence de forte décélération de l'aéronef. Dans cette position prédéfinie du filin 29, une réserve 34 du filin 29 est ménagée entre la poulie 32 et l'extrémité distale de la boucle formée par le filin 29.

Sur les fig.8 et fig.10, le baquet 3,4 est soumis à des efforts supérieurs à un seuil d'effort prédéfini, tel que classiquement en cas de forte décélération de l'aéronef.

Dans ce cas sous l'effet des efforts supportés par les plaques d'assises 22, le filin 29 fixé sur une plaque d'assise 22 donnée circule autour de la poulie 32 en se repliant et en se détendant successivement, avec pour effet de procurer l'absorption d'énergie nécessaire à la protection du passager installé sur la plaque d'assise 22. On relèvera que ladite réserve 34 du filin 29 détermine la course en basculement parcourue par la plaque d'assise 22, jusqu'à la mise en butée contre la poulie 32 de l'extrémité distale de la boucle formée par le filin 29.

En fin de course du filin 29 tel qu'illustré sur la fig.8, l'enroulement du filin 29 autour de la poulie 32 ménage un moyen de retenue 33 du filin 29 formé par un noeud connu sous la dénomination courante de « noeud d'alouette » (cow hitch en langue anglaise). Un tel noeud permet d'éviter une échappée du filin 29 hors de la poulie 32 et par suite procure une retenue de la plaque d'assise 22 pour soutenir le passager. Plus particulièrement et notamment en se reportant successivement sur les fig.9 et fig.10, une variation de la distance de mise en prise du filin 29 sur la banquette, entre la prise du filin 29 sur la plaque d'assise 22 et la prise du filin 29 sur le dossier 4, autorise un basculement vers le bas de la plaque d'assise 22 à l'arrière de la banquette, par pivotement de la plaque d'assise 22 autour du longeron avant 10.

De telles dispositions permettent de protéger individuellement les passagers 23 installés sur deux plaques d'assise 22 adjacentes données, et cela malgré une installation de plusieurs passagers 23 sur l'assise 3 de la banquette globalement articulée en pivotement sur le longeron avant 10 en présentant un plan sensiblement continu d'installation des passagers 23 sur la banquette.

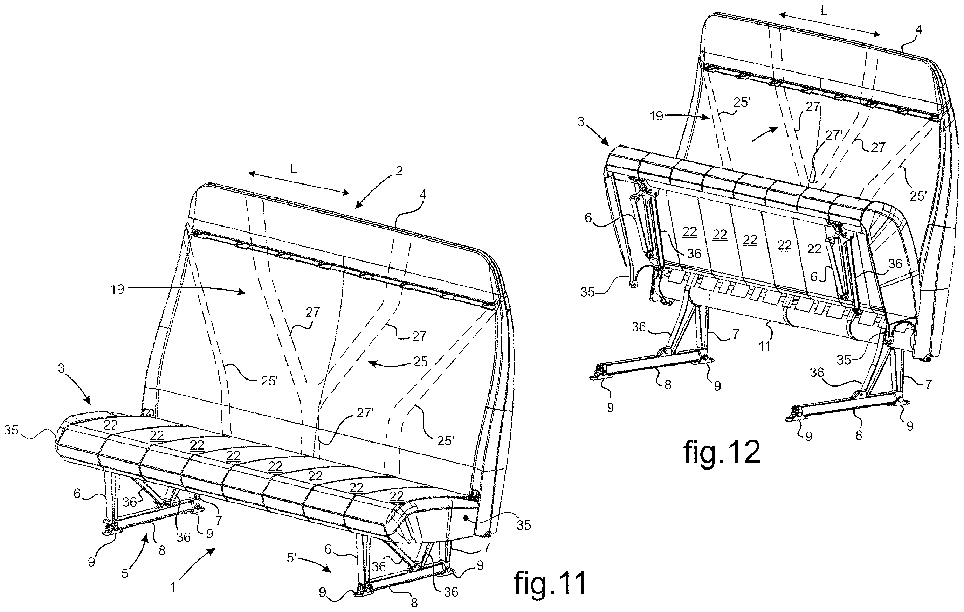

Sur les fig.11 et fig.12, dans l'aéronef AC selon l'invention, l'assise 3 de la banquette est rabattable vers le dossier 4, depuis ladite position commune d'utilisation de la banquette illustrée sur la fig.11 vers une position de rabat global de l'assise 3 contre le dossier 4 illustrée sur la fig.12. A cet effet, le longeron avant 10 et le longeron arrière 11 sont reliés entre eux par des traverses 35, dont au moins deux traverses d'extrémités placées aux extrémités longitudinales respectives de l'assise 3. Les traverses 35 sont conjointement porteuses du longeron avant 10 et sont articulées en pivotement sur le longeron arrière 11.

Le longeron avant 10 est assemblé au piètement 5,5' par des moyens de fixation facilement réversible, tel que par brochage par exemple, de sorte que le longeron avant 10 peut être séparé du piètement 5,5' pour autoriser le basculement de l'assise 3 contre le dossier 4 tel que représenté sur la fig.12.

Plus particulièrement, la banquette est contreventée entre l'avant et l'arrière par l'intermédiaire du piètement 5,5' tel que sur l'exemple de réalisation illustré. Le jambage avant 6 et le jambage arrière 7 de chacun des pieds 5,5' sont munis de béquilles 36 reliant respectivement le longeron avant 10 et le longeron arrière 11 à une semelle 8 d'un pied 5,5' donné équipée de dits verrous 9. Le longeron avant 10 est monté pivotant sur les jambages avant 6 eux-mêmes fixés aux semelles 8 par l'intermédiaire des dits moyens de fixation réversible, pour autoriser un rabat des jambages avant 6 sous l'assise 3 lorsqu'elle est rabattue contre le dossier 4 à partir d'un mouvement de pivotement relatif entre les jambages avant 6 et le longeron avant 10.

## Revendications

1. Banquette pour aéronef comportant :
- ) une structure porteuse (1) soutenant une ossature (2) ménageant un baquet (3,4) formé d'une assise (3) et d'un dossier (4), le baquet (3,4) comportant une pluralité prédéfinie d'emplacements d'accueil (20,24,28) individuel de passagers (23), la structure porteuse (1) comprenant un piètement (5,5') muni de verrous (9) de fixation de la banquette en station d'utilisation et des longerons, dont un longeron qualifié « avant » (10) et situé à l'avant de la banquette en station d'utilisation et un longeron qualifié « arrière » (11) et situé à l'arrière de la banquette en station d'utilisation, ledit longeron avant (10) et ledit longeron arrière (11) étant chacun montés sur le piètement (5,5'), l'ossature (2) étant montée pivotante sur la structure porteuse (1) au moins par l'intermédiaire de l'assise (3) montée pivotante sur le piètement (5,5') par l'intermédiaire du longeron avant (10),
- ) une pluralité de harnais (15) en nombre correspondant au nombre optimal de passagers (23) pouvant être accueillis simultanément par la banquette, chaque harnais (15) comportant au moins quatre sangles (16,16',17,17') dont deux sangles d'épaule (16,16') et deux sangles pelviennes (17,17'), les sangles (16,16',17,17') étant chacune ancrées sur la banquette à l'une de leurs extrémités et étant chacune verrouillable à leur extrémité opposée sur un organe de blocage (21) en des points de verrouillages prédéfinis (A,B,C,D,E) conformément à un bouclage d'un harnais (15) autour d'un passager (23),
- ) une pluralité d'absorbeurs d'énergie (14) en prise sur l'ossature (2), les absorbeurs d'énergie (14) procurant une retenue au moins de l'assise (3) en cas de forte décélération de l'aéronef à l'encontre des efforts subis par le baquet (3,4) et générés par au moins un passager (23) accueilli par la banquette, les absorbeurs d'énergie (14) étant chacun déformables par suite des efforts supportés par le baquet (3,4) supérieurs à un seuil d'effort prédéfini,
**caractérisée :**
**en ce que** l'assise (3) est subdivisée suivant l'extension générale du longeron avant (10) en une pluralité de plaques d'assise (22) adjacentes, deux plaques d'assise (22) voisines ménageant conjointement un emplacement d'accueil (20,24,28) individuel d'un passager (23) par réception individuelle d'une fesse respective du passager (23),
**en ce que** les plaques d'assise (22) sont chacune individuellement montées mobiles en pivotement sur la structure porteuse (1), les plaques d'assises (22) étant d'une part chacune montées individuellement pivotantes sur le piètement (5,5) à leur bord avant par l'intermédiaire du longeron avant (10) et d'autre part étant chacune individuellement soutenues en suspension à leur bord opposé arrière par au moins un dit absorbeur d'énergie (14),
**en ce que** considérant une répartition des sangles (16,16',17,17') de chacun des harnais (15) en deux jeux de sangles (16,17 ; 16'17') distincts comprenant chacun une sangle d'épaule (16,16',) et une sangle pelvienne (17,17'), chaque jeu de sangles (16,17 ; 16'17') étant affecté au ceinturage d'un passager (23) respectivement à l'un et l'autre de ses côtés, les sangles (16,16',17,17') d'un jeu de sangles (16,17 ; 16'17') qualifié de médian et placé en adjacence entre deux quelconques jeux de sangles (16,17 ; 16'17') qualifiés de voisins sont conjointement verrouillables sur un même organe de blocage (21), sélectivement avec l'un ou l'autre desdits jeux de sangles (16,17 ;16'17') voisins par l'intermédiaire de combinaisons respectives de points verrouillage (ACDE ; ABCD) de l'organe de blocage (21) identifiées selon la position relative l'un par rapport à l'autre des jeux de sangles (16,17 ; 16'17') coopérant avec un même organe de blocage (21),
les différents jeux de sangles étant coopérants deux à deux avec un même organe de blocage selon les emplacements d'accueil choisis par les passagers et comprenant chacun deux plaques d'assise adjacentes, trois plaques d'assise successivement adjacentes identifiant deux à deux un nombre d'emplacements d'accueil égal à deux, et trois jeux de sangles successivement adjacents respectivement affectés deux à deux au ceinturage d'un passager à l'un de ses côtés étant aptes à ceinturer un passager quel que soit l'emplacement d'accueil choisi par le passager exploitant deux quelconques plaques d'assise adjacentes.

2. Banquette pour aéronef selon la revendication 1,
**caractérisée en ce que** les organes de blocage (21) comprennent chacun un jeu de cinq organes de verrouillage, dont :
- ) un point de verrouillage, qualifié de « permanent » (A), bloquant en permanence sur l'organe de blocage (21) l'une des sangles d'un quelconque jeu de sangles (16,17 ; 16', 17') qualifié de premier, et
- ) quatre points de verrouillage qualifiés de « temporaires » (B,C,D,E) bloquant temporairement sur l'organe de blocage (21), en position de bouclage d'un harnais (15) autour d'un passager (23), l'autre sangle du premier jeu de sangles (16, 17 ; 16',17') et les sangles d'un quelconque jeu de sangles (16, 17 ; 16',17') adjacent au premier jeu de sangles (16, 17 ; 16',17') sélectivement par jeux variables de trois points de verrouillage temporaires (C,D,E ; B,C,D) respectivement identifiés selon la position relative des jeux de sangles (16, 17 ; 16',17') utilisés pour ceinturer le passager.

3. Banquette selon l'une quelconque des revendications 1 et 2, **caractérisée :**
**en ce que** les absorbeurs d'énergie (14) comprennent chacun un filin (29) refermé en boucle sur lui-même et enroulé étroitement entre les extrémités de ladite boucle formée par le filin autour d'une poulie (32) montée tournante sur un palier (31) fixé au dossier (4),
**en ce que** l'une des extrémités dite proximale de la boucle est fixée à une plaque d'assise (22) affectée au filin (29), l'autre extrémité distale de la boucle étant libre en étant disposée en surplomb de ladite poulie (32) en l'absence d'efforts supportés par le filin (29) inférieurs audit seuil d'effort déterminant la mise en oeuvre de l'absorbeur d'énergie (14), et
**en ce que** le filin (29) est muni d'un moyen de retenue (33) de l'extrémité distale de la boucle contre la poulie (32) en fin de course du filin (29) provoquée par la mise en oeuvre de l'absorbeur d'énergie (14) par suite des efforts supportés par la plaque d'assise (22) en cas de forte décélération de l'aéronef.

4. Banquette selon la revendication 3,
**caractérisée en ce que** ledit moyen de retenue (33) est formé par un enroulement du filin (29) autour de la poulie (32) par l'intermédiaire d'un noeud connu sous le nom de « noeud d'alouette » se refermant autour de la poulie (32) à l'extrémité distale de la boucle en fin de course du filin (29) provoquée par suite de la mise en oeuvre de l'absorbeur d'énergie (14).

5. Banquette selon l'une quelconque des revendications 1 à 4, **caractérisée,**
**en ce que** le piètement comprend au moins deux pieds (5,5') munis chacun d'au moins un verrou (9) de fixation de la banquette en station d'utilisation, les pieds (5,5') étant conjointement porteurs du longeron avant (10) et du longeron arrière (11) et comportant chacun au moins un jambage avant (6) et au moins un jambage arrière (7), et en ce que lesdits jambages arrière (7) s'étendent en élévation vers le sommet du dossier (4) et sont conjointement porteurs d'au moins un longeron complémentaire (13) intégré au dossier (4).

6. Banquette selon l'une quelconque des revendications 1 à 5,
**caractérisée en ce que** les sangles d'épaule (16,16') de l'ensemble des harnais (15) sont chacune en prise sur des enrouleurs (18) individuels montés sur le dossier (4).

7. Banquette selon les revendications 5 et 6,
**caractérisée en ce que** lesdits jambages arrière (7) sont conjointement porteurs d'un longeron annexe (37) surplombant les enrouleurs (18) et guidant les sangles d'épaule (16,16') depuis le dossier (4) vers l'avant de la banquette, le longeron arrière (11) guidant les sangles pelviennes (17,17') depuis le dossier (4) vers l'avant de la banquette.

8. Banquette selon la revendication 7,
**caractérisée en ce que** le longeron arrière (11), le longeron complémentaire (13) et le longeron annexe (37) constituent des organes de reprise des efforts supportés par la banquette, le longeron arrière (11) supportant le dossier (4) à sa base et reprenant les efforts transmis au baquet (3,4) par les sangles pelviennes (17,17') et par le piètement (5,5'), le longeron complémentaire (13) et le longeron annexe (37) reprenant les efforts transmis au baquet (3,4) par les enrouleurs (18) et par les sangles d'épaule (16,16'), ainsi que transmis par les absorbeurs d'énergie (14) et le piètement.

9. Banquette selon l'une quelconque des revendications 1 à 8,
**caractérisée en ce que** le longeron avant (10) et le longeron arrière (11) sont reliés entre eux par des traverses (35) ménageant un ensemble de basculement global de l'assise (3) vers le dossier (4), le longeron avant (10) étant assemblé au piètement (5,5') par des moyens de fixation réversible autorisant une séparation du longeron avant (10) vis-à-vis du piètement (5,5'), l'assise (3) étant globalement rabattable vers le dossier (4) par séparation du longeron avant (10) vis-à-vis du piètement (5,5') et par pivotement de l'assise (3) autour du longeron arrière (11) par l'intermédiaire des traverses (35).

10. Banquette selon la revendication 9,
**caractérisée en ce que** le longeron avant (10) et les jambages avant (6) sont montés en pivotement relatif l'un par rapport aux autres, les jambages avant (6) étant assemblés à des semelles (8) respectives des pieds (5,5') par l'intermédiaire des moyens de fixation réversible, lesdites semelles (8) étant équipées des verrous (9) de fixation de la banquette en station d'utilisation.

11. Banquette selon la revendication 10,
**caractérisée en ce que** la banquette est contreventée entre l'avant et l'arrière par l'intermédiaire du piètement (5,5'), les jambages avant (6) et les jambages arrière (7) comprenant des béquilles (36) reliant aux semelles (8) respectivement le longeron avant (10) et le longeron arrière (11).

12. Banquette selon l'une quelconque des revendications 1 à 11,
**caractérisée en ce qu'**au moins le dossier (4) comporte un repère visuel (19) identifiant les emplacements d'accueil (20,24,28) individuel des passagers (23), lesdits emplacements d'accueil (20,24,28) étant individuellement identifiés par un marquage formant au moins en partie le repère visuel (19), ledit marquage repérant visuellement un groupe de deux plaques d'assise (22) voisines et cela pour tous les groupes possibles de deux plaques d'assise (22) voisines.

13. Banquette selon la revendication 12,
**caractérisée en ce que** le repère visuel (19) comprend au moins un jeu de bandes (25,25') :
- ) séparant visuellement des emplacements d'accueil (20,24) de la banquette respectivement situés de part et d'autre des bandes (25,25') et comportant chacun un premier groupe de deux plaques d'assise (22) voisines et distinctes de l'un à l'autre desdits emplacements d'accueil (20,24) situés de part et d'autre des bandes (25,25'), et
- ) pointant visuellement une zone d'adjacence entre deux plaques d'assises (22) voisines d'un deuxième groupe formant un emplacement d'accueil (28), les plaques d'assises (22) du deuxième groupe comprenant une plaque d'assise (22) de chacun des premiers groupes.

14. Aéronef (AC) comportant au moins une banquette selon la revendication 1.

15. Aéronef (AC) selon la revendication 14, **caractérisé en ce que** l'aéronef est un giravion.

## Patentansprüche

1. Sitzbank für ein Luftfahrzeug mit:
- ) einem Trageaufbau (1), der eine Tragkonstruktion (2) trägt, die eine Schale (3, 4) bildet, geformt aus einem Sitz (3) und einer Rückenlehne (4), wobei die Schale (3, 4) eine vorbestimmte Vielzahl einzelner Sitzplätze (20, 24, 28) für Passagiere (23) aufweist, wobei der Trageaufbau (1) ein Fußgestell (5, 5') aufweist mit Riegeln (9) zum Feststellen der Sitzbank im Benutzungszustand und mit Längsträgern, von denen ein Längsträger "vorderer Längsträger" (10) genannt wird und im Betriebszustand an der Vorderseite der Sitzbank gelegen ist, und ein Längsträger "hinterer Längsträger" (11) genannt wird und im Betriebszustand an der Hinterseite der Sitzbank gelegen ist, wobei der vorderer Längsträger (10) und der hintere Längsträger (11) jeweils auf dem Fußgestell (5, 5') montiert sind, wobei die Tragkonstruktion (2) schwenkbar auf dem Trageaufbau (1) mindestens über den Sitz (3) montiert ist, der schwenkbar über den vorderen Längsträger (10) an dem Fußgestell (5, 5') montiert ist,
- ) einer Mehrzahl von Gurtgeschirren (15) in einer Anzahl, die der optimalen Anzahl von Passagieren (23) entspricht, die gleichzeitig auf der Sitzbank sitzen können, wobei jedes Gurtgeschirr (15) mindestens vier Gurte (16, 16', 17, 17') aufweist, wovon zwei Gurte Schultergurte (16, 16') und zwei Gurte Beckengurte (17, 17') sind, wobei die Gurte (16, 16', 17, 17') jeweils mit einem ihrer Enden an der Sitzbank verankert sind, und jeweils an ihren gegenüberliegenden Enden auf einem Schließorgan (21) an vordefinierten Verriegelungspunkten (A, B, C, D, E) auf einem Schließorgan (21) verriegelbar sind, um ein Gurtgeschirr (15) an einen Passagier (23) anzulegen,
- ) einer Mehrzahl von Energieabsorbern (14), die in Eingriff mit der Tragkonstruktion (2) stehen, wobei die Energieabsorber (14) einen Rückhalt mindestens des Sitzes (3) im Falle einer starken Verzögerung des Luftfahrzeugs gegenüber Kräften gewährleisten, mit denen die Schale (3, 4) beaufschlagt wird und die von mindestens einem Passagier (23), der auf der Sitzbank sitzt, erzeugt werden, wobei die Energieabsorber (14) jeweils infolge von Kräften, die von der Schale (3, 4) erfahren werden, die größer sind als ein vordefinierter Kraftschwellenwert, verformbar sind,
**dadurch gekennzeichnet, dass**:
der Sitz (3) entlang der allgemeinen Erstreckungsrichtung des vorderen Längsträgers (10) in eine Mehrzahl von nebeneinanderliegenden Sitzplatten (22) unterteilt ist, wobei zwei benachbarte Sitzplatten (22) zusammen einen einzelnen Sitzplatz (20, 24, 28) eines Passagiers (23) durch eine einzelne Aufnahme einer jeweiligen Gesäßbacke des Passagiers (23) bilden,
die Sitzplatten (22) jeweils einzeln drehbeweglich auf dem Trageaufbau (1) montiert sind, wobei die Sitzplatten (22) einerseits jeweils einzeln verschwenkbar auf dem Fußgestell (5, 5') an ihrer Vorderkante über den vorderen Längsträger (10) montiert sind, und andererseits jeweils einzeln an ihrer hinteren gegenüberliegenden Wand aufgehängt durch mindestens einen Energieabsorber (14) gehaltert werden,
bei einer Aufteilung der Gurte (16, 16', 17, 17') eines jeden Gurtgeschirrs (15) in zwei getrennte Gurtsätze (16, 17; 16', 17'), die jeweils einen Schultergurt (16, 16') und einen Beckengurt (17, 17') aufweisen, jeder Gurtsatz (16, 17; 16', 17') einer Umgurtung eines Passagiers (23) jeweils an seinen beiden Seiten zugewiesen ist, wobei die Gurte (16, 16', 17, 17') eines mittlerer Gurtsatz genannten Gurtsatzes, der benachbart zwischen zwei beliebigen, benachbarte Gurtsätze genannten Gurtsätzen (16, 17, 16', 17') angeordnet ist, zusammen auf einem selben Verriegelungsorgan (21) verriegelbar sind, wahlweise mit dem einen oder dem anderen der benachbarten Gurtsätze (16, 17; 16', 17') durch jeweilige Kombinationen von Verriegelungspunkten (ACDE; ABCD) des Schließorgans (21), welche gemäß der Relativlage eines Gurtsatzes zu einem anderen Gurtsatz (16, 17; 16', 17'), die mit einem selben Schließorgan (21) zusammenwirken, gehören, wobei verschiedene Gurtsätze jeweils zu zweit mit einem selben Schließorgan gemäß der durch die Passagiere gewählten Sitzplätze zusammenwirken und jeweils zwei benachbarte Sitzplatten aufweisen, wobei drei aufeinanderfolgende benachbarte Sitzplatten jeweils zu zweit eine Anzahl von Sitzplätzen gleich zwei bilden, und wobei drei aufeinanderfolgend benachbarte Gurtsätze, die jeweils zu zweit der Umgurtung eines Passagiers an einer seiner Seiten zugewiesen sind, einen Passagier umgurten können, unabhängig von dem von dem Passagier gewählten Sitzplatz, indem zwei beliebige benachbarte Sitzplatten benutzt werden.

2. Sitzbank für ein Luftfahrzeug nach Anspruch 1,
**dadurch gekennzeichnet, dass** die Schließorgane (21) jeweils einen Satz von fünf Verriegelungsorganen aufweisen, darunter:
- ) ein "permanenter Verriegelungspunkt" genannter Verriegelungspunkt (A), der permanent auf dem Schließorgan (21) einen der Gurte eines beliebigen Satzes von Gurten (16, 17; 16', 17'), der erster Gurt genannt wird, blockiert, und
- ) vier "temporäre Verriegelungspunkte" genannte Verriegelungspunkte (B, C, D, E), die zeitweise mit dem Schließorgan (21) in von einem Passagier (23) angelegter Stellung eines Gurtgeschirrs (15) den anderen Gurt des ersten Gurtsatzes (16, 17; 16', 17') und die Gurte eines beliebigen Gurtsatzes (16, 17; 16', 17'), der zu dem ersten Gurtsatz (16, 17; 16', 17') benachbart ist, verriegeln, wahlweise durch variable Sätze von drei temporären Verriegelungspunkten (C,D,E ; B,C,D), die jeweils gemäß der relativen Lage der Gurtsätze (16, 17; 16', 17'), die verwendet werden, um den Passagier anzugurten, bestimmt sind.

3. Sitzbank nach einem der Ansprüche 1 und 2,
**dadurch gekennzeichnet, dass**:
die Energieabsorber (14) jeweils eine Leine (29) aufweisen, die eine Schleife aufweist und eng zwischen den Enden der durch die Leine gebildeten Schleife auf einer Spule (32) aufgewickelt ist, die drehbar auf einem Lager (31), das an der Rückenlehne (4) befestigt ist, montiert ist,
eines der proximales Ende genannten Enden der Schleife an einer Sitzplatte (22) befestigt ist, die der Leine (29) zugeordnet ist, wobei das andere distale Ende der Schleife ein freies Ende ist, welches in Abwesenheit von Kräften, mit denen die Leine (29) beaufschlagt ist,
die kleiner als der Kraftschwellenwert sind, der den Einsatz des Energieabsorbers (14) bestimmt, über die Spule (32) überhängend angeordnet ist, und
die Leine (29) mit einem Mittel (33) zum Zurückhalten des distalen Endes der Schleife an der Spule (32) am Ende der Leine (29) versehen ist, was bewirkt wird durch den Einsatz des Energieabsorbers (14) infolge von Kräften, mit denen die Sitzplatten (22) im Falle einer starken Verzögerung des Luftfahrzeugs beaufschlagt sind.

4. Sitzbank nach Anspruch 3,
**dadurch gekennzeichnet, dass** das Rückhaltemittel (33) durch ein Aufrollen der Leine (29) auf die Spule (32) über einen Knoten gebildet wird, der unter dem Namen "Alouette"-Knoten (Ankerstich) bekannt ist, der die Spule (32) am distalen Ende der Schleife am Ende des Abwickelns des Seils (29), hervorgerufen infolge des Einsatzes des Energieabsorbers (14), umschließt.

5. Sitzbank nach einem der Ansprüche 1 bis 4,
**dadurch gekennzeichnet, dass** das Fußgestell mindestens zwei Füße (5, 5') aufweist, die jeweils mit mindestens einem Riegel (9) zur Befestigung der Sitzbank in Benutzungsstellung versehen sind, wobei die Füße (5, 5') zusammen den vorderen Längsträger (10) und den hinteren Längsträger (11) tragen und jeweils mindestens einen vorderen Pfosten (6) und mindestens einen hinteren Pfosten (7) aufweisen, und dadurch, dass die hinteren Pfosten (7) sich in Höhenrichtung zu der Oberkante der Rückenlehne (4) erstrecken und gemeinsam mindestens einen zusätzlichen Träger (13) tragen, der in die Rückenlehne (4) integriert ist.

6. Sitzbank nach einem der Ansprüche 1 bis 5,
**dadurch gekennzeichnet, dass** die Schultergurte (16, 16') der Gesamtheit der Gurtgeschirre (15) jeweils in Eingriff mit einzelnen an der Rückenlehne (4) montierten Aufrollvorrichtungen (18) stehen.

7. Sitzbank nach den Ansprüchen 5 und 6,
**dadurch gekennzeichnet, dass** die hinteren Pfosten (7) zusammen einen angefügten Träger (37) tragen, der die Aufrollvorrichtungen (18) überragt und die Schultergurte (16, 16') ausgehend von der Rückenlehne (4) zum vorderen Teil der Sitzbank führt, wobei der hintere Träger (11) die Beckengurte (17, 17') ausgehend von der Rückenlehne (4) zu dem vorderen Teil der Sitzbank führt.

8. Sitzbank nach Anspruch 7,
**dadurch gekennzeichnet, dass** der hintere Längsträger (11), der zusätzliche Längsträger (13) und der angefügte Längsträger (37) Organe zur Aufnahme von Kräften, mit denen die Sitzbank beaufschlagt wird, aufweisen, wobei der hintere Längsträger (11) die Rückenlehne (4) an ihrer Basis stützt und Kräfte aufnimmt, die auf die Schale (3, 4) durch die Beckengurte (17, 17') und durch das Fußgestell (5, 5') übertragen werden, wobei der zusätzliche Längsträger (13) und der angefügte Längsträger (37) die Kräfte aufnehmen, die auf die Schale (3, 4) durch die Aufrollvorrichtung (18) und die Schultergurte (16, 16') übertragen werden, sowie die, die durch die Energieabsorber (14) und das Fußgestell übertragen werden.

9. Sitzbank nach einem der Ansprüche 1 bis 8,
**dadurch gekennzeichnet, dass** der vordere Längsträger (10) und der hintere Längsträger (11) miteinander durch Querträger (35) verbunden sind, die eine allgemeine Kippanordnung des Sitzes (3) zur Rückenlehne (4) bilden, wobei der vordere Längsträger (10) an dem Fußgestell (5, 5') über lösbare Befestigungsmittel montiert ist, die eine Trennung des vorderen Längsträgers (10) von dem Fußgestell (5, 5') erlauben, wobei der Sitz (3) insgesamt auf die Rückenlehne (4) zu umklappbar ist durch Trennung des vorderen Längsträgers (10) von dem Fußgestell (5, 5') und durch Verschwenkung des Sitzes (3) um den hinteren Längsträger (11) herum mittels der Querträger (35).

10. Sitzbank nach Anspruch 9,
**dadurch gekennzeichnet, dass** der vordere Längsträger (10) und die vorderen Pfosten (6) verschwenkbar relativ zueinander montiert sind, wobei die vorderen Pfosten (6) an jeweiligen Sohlen (8) der Füße (5, 5') über lösbare Befestigungsmittel montiert sind, wobei die Sohlen (8) mit Riegeln (9) zur Befestigung der Sitzbank im Benutzungszustand versehen sind.

11. Sitzbank nach Anspruch 10,
**dadurch gekennzeichnet, dass** die Sitzbank zwischen der Vorderseite und der Rückseite über das Fußgestell (5, 5') querverbunden ist, wobei die vorderen Pfosten (6) und die hinteren Pfosten (7) Stützen (36) aufweisen, die jeweils den vorderen Längsträger (10) und den hinteren Längsträger (11) mit den Sohlen (8) verbinden.

12. Sitzbank nach einem der Ansprüche 1 bis 11,
**dadurch gekennzeichnet, dass** mindestens die Rückenlehne (4) eine sichtbare Markierung (19) aufweist, die die einzelnen Sitzplätze (20, 24, 28) der Passagiere (23) ausweist, wobei die Sitzplätze (20, 24, 28) einzeln durch eine Markierung ausgewiesen sind, die zumindest teilweise die sichtbare Markierung (19) bildet, wobei die Markierung sichtbar eine Gruppe von zwei benachbarten Sitzplatten (22) darstellt und dies für alle möglichen Gruppen von zwei benachbarten Sitzplatten (22).

13. Sitzbank nach Anspruch 12,
**dadurch gekennzeichnet, dass** die sichtbare Markierung (19) mindestens einen Satz Bänder (25, 25') aufweist:
- ) die sichtbar die Sitzplätze (20, 24) der Sitzbank trennen, die jeweils zu beiden Seiten der Bänder (25, 25') gelegen sind, und jeweils eine erste Gruppe von zwei benachbarten Sitzplatten (22) sind und die getrennt von dem einen zum anderen Sitzplatz (20, 24) sind, die zu beiden Seiten der Bänder (25, 25') gelegen sind, und
- ) sichtbar einen benachbarten Bereich zwischen zwei benachbarten Sitzplatten (22) einer zweiten Gruppe anzeigen, die einen Sitzplatz (28) bildet, wobei die Sitzplatten (22) der zweiten Gruppe eine Sitzplatte (22) einer jeden der ersten Gruppen aufweisen.

14. Luftfahrzeug (AC) mit mindestens einen Sitzbank nach Anspruch 1,

15. Luftfahrzeug (AC) nach Anspruch 14,
**dadurch gekennzeichnet, dass** das Luftfahrzeug ein Drehflügelflugzeug ist.

## Claims

1. Aircraft bench, comprising:
- ) a carrier structure (1) supporting a frame (2) providing a bucket (3, 4) formed by a seat pan (3) and a seat back (4), the bucket (3, 4) having a predefined plurality of receiving locations (20, 24, 28) for individually receiving passengers (23), the carrier structure (1) comprising a stand (5, 5') provided with catches (9) for fixing the bench in its use location and with spars, including a "front" spar (10) situated at the front of the bench in the use location and a "rear" spar (11) situated at the rear of the bench in the use location, said front spar (10) and said rear spar (11) each being mounted on the stand (5, 5'), the frame (2) being mounted to pivot on the carrier structure (1) at least by way of the seat pan (3) mounted to pivot on the stand (5, 5') by way of the front spar (10),
- ) a plurality of harnesses (15) in a number corresponding to the optimum number of passengers (23) capable of being received simultaneously by the bench, each harness (15) comprising at least four straps (16, 16', 17, 17'), including two shoulder straps (16, 16') and two lap straps (17, 17'), the straps (16, 16', 17, 17') each being anchored to the bench at one of their ends and each being lockable at their opposite end to a buckle (21) at predefined locking points (A, B, C, D, E) so as to loop a harness (15) around a passenger (23),
- ) a plurality of energy absorbers (14) engaged on the frame (2), the energy absorbers (14) serving to retain at least the seat pan (3), in the event of strong deceleration of the aircraft, against the forces borne by the bucket (3, 4) and generated by at least one passenger (23) received by the bench, the energy absorbers (14) each being deformable as a consequence of the forces borne by the bucket (3, 4) above a predefined force threshold,
**characterized:**
**in that** the seat pan (3) is subdivided along the general extension of the front spar (10) into a plurality of adjacent seat plates (22), two neighbouring seat plates (22) jointly forming a receiving location (20, 24, 28) for individually receiving a passenger (23) by individually receiving a respective buttock of the passenger (23),
**in that** the seat plates (22) are each individually mounted to move by pivoting on the carrier structure (1), the seat plates (22) on the one hand each being mounted to pivot individually on the stand (5, 5) at their front edge by way of the front spar (10) and on the other hand each being individually supported in suspension at their opposite rear edge by at least one energy absorber (14),
**in that**, considering a distribution of the straps (16, 16', 17, 17') of each of the harnesses (15) as two distinct sets of straps (16, 17; 16', 17'), each comprising a shoulder strap (16, 16') and a lap strap (17, 17'), each set of straps (16, 17; 16', 17') serving to belt in a passenger (23) on respectively one and the other of his sides, the straps (16, 16', 17, 17') of a "middle" set of straps (16, 17; 16', 17') that are placed adjacent between any two "neighbouring" sets of straps (16, 17; 16', 17') are jointly lockable to one and the same buckle (21), selectively with one or the other of said neighbouring sets of straps (16, 17; 16', 17') by way of respective combinations of locking points (ACDE; ABCD) of the buckle (21) that are identified depending on the relative position of one with respect to the other of the sets of straps (16, 17; 16', 17') cooperating with the same buckle (21),
the various sets of straps cooperating in pairs with one and the same buckle depending on the receiving locations selected by the passengers and each comprising two adjacent seat plates, three successively adjacent seat plates defining in pairs a number of receiving locations equal to two, and three successively adjacent sets of straps respectively assigned in pairs for belting in a passenger on one of his sides being able to belt in a passenger regardless of the receiving location selected by the passenger using any two adjacent seat plates.

2. Aircraft bench according to claim 1,
**characterized in that** the buckles (21) each have a set of five locking elements, including:
- ) a "permanent" locking point (A) for permanently locking to the buckle (21) one of the straps of any one set of straps (16, 17; 16', 17') referred to as the first set, and
- ) four "temporary" locking points (B, C, D, E) for temporarily locking to the buckle (21), in the position for looping a harness (15) around a passenger (23), the other strap of the first set of straps (16, 17; 16', 17') and the straps of any one set of straps (16, 17; 16', 17') adjacent to the first set of straps (16, 17; 16', 17') selectively by variable sets of three temporary locking points (C, D, E; B, C, D) respectively identified depending on the relative position of the sets of straps (16, 17; 16', 17') used for belting in the passenger.

3. Bench according to any one of claims 1 and 2, **characterized**
**in that** the energy absorbers (14) each comprise a tether (19) closed in a loop on itself and wound tightly between the ends of said loop formed by the tether around a pulley (32) mounted to rotate on a bearing (31) fixed to the seat back (4) in that one of the ends, referred to as the proximal end, of the loop is fixed to a seat plate (22) associated with the tether (29), the other, distal end of the loop being free and being arranged above said pulley (32) in the absence of forces borne by the tether (29) below said force threshold determining when the energy absorber (14) is put into use, and in that the tether (29) is provided with a retaining means (33) for retaining the distal end of the loop against the pulley (32) at the end of travel of the tether (29) caused by the energy absorber (14) being put into use as a result of the forces borne by the seat plate (22) in the event of strong deceleration of the aircraft.

4. Bench according to claim 3,
**characterized in that** said retaining means (33) is formed by winding the tether (29) around the pulley (32) by way of a knot known as a "cow hitch" closed around the pulley (32) at the distal end of the loop at the end of travel of the tether (29) resulting from the energy absorber (14) being put into use.

5. Bench according to any one of the preceding claims 1 to 4,
**characterized**
**in that** the stand comprises at least two brackets (5, 5'), each provided with at least one catch (9) for fixing the bench in the use location, the brackets (5, 5') jointly carrying the front spar (10) and the rear spar (11) and each having at least one front leg (6) and at least one rear leg (7), and
**in that** said rear legs (7) extend upwards towards the top of the seat back (4) and jointly carry at least one additional spar (13) integrated in the seat back (4).

6. Bench according to any one of the preceding claims 1 to 5,
**characterized in that** the shoulder straps (16, 16') of all of the harnesses (15) are each engaged on individual winders (18) mounted on the seat back (4).

7. Bench according to claims 5 and 6,
**characterized in that** said rear legs (7) jointly carry an auxiliary spar (37) which is located above the winders (18) and guides the shoulder straps (16, 16') from the seat back (4) towards the front of the bench, the rear spar (11) guiding the lap straps (17, 17') from the seat back (4) towards the front of the bench.

8. Bench according to claim 7,
**characterized in that** the rear spar (11), the additional spar (13) and the auxiliary spar (37) constitute elements for absorbing forces borne by the bench, the rear spar (11) supporting the seat back (4) at the base thereof and absorbing the forces transmitted to the bucket (3, 4) by the lap straps (17, 17') and by the stand (5, 5'), the additional spar (13) and the auxiliary spar (37) absorbing the forces transmitted to the bucket (3, 4) by the winders (18) and by the shoulder straps (16, 16') as well as the forces transmitted by the energy absorbers (14) and the stand.

9. Bench according to any one of claims 1 to 8,
**characterized in that** the front spar (10) and the rear spar (11) are connected to one another by cross-members (35) forming an overall tilting assembly for tilting the seat pan (3) towards the seat back (4), the front spar (10) being assembled to the stand (5, 5') by reversible fixing means enabling a separation of the front spar (10) from the stand (5, 5'), the seat pan (3) being foldable as a whole towards the seat back (4) by separating the front spar (10) from the stand (5, 5') and by pivoting the seat pan (3) about the rear spar (11) by way of the cross-members (35).

10. Bench according to claim 9,
**characterized in that** the front spar (10) and the front legs (6) are mounted to pivot with respect to one another, the front legs (6) being assembled to respective soleplates (8) of the brackets (5, 5') by way of the reversible fixing means, said soleplates (6) being equipped with catches (9) for fixing the bench in the use location.

11. Bench according to claim 10,
**characterized in that** the bench is stayed between the front and the rear by way of the stand (5, 5'), the front legs (6) and the rear legs (7) having props (36) connecting the front spar (10) and the rear spar (11) respectively to the soleplates (8).

12. Bench according to any one of claims 1 to 11,
**characterized in that** at least the seat back (4) includes a visual marker (19) identifying the receiving locations (20, 24, 28) for individually receiving the passengers (23), said receiving locations (20, 24, 28) being individually identified by a marking forming at least in part the visual marker (19), said marking visually identifying a group of two neighbouring seat plates (22) and doing so for all possible groups of two neighbouring seat plates (22).

13. Bench according to claim 12,
**characterized in that** the visual marker (19) comprises at least one set of strips (25, 25'):
- ) visually separating receiving locations (20, 24) of the bench situated respectively on either side of the strips (25, 25') and each comprising a first group of two neighbouring seat plates (22), distinct from one another, of said receiving locations (20, 24) situated on either side of the strips (25, 25'), and
- ) visually indicating a zone of adjacency between two neighbouring seat plates (22) of a second group forming a receiving location (28), the seat plates (22) of the second group comprising one seat plate (22) from each of the first groups.

14. Aircraft (AC) having at least one bench according to claim 1.

15. Aircraft (AC) according to claim 14, **characterized in that** the aircraft is a rotorcraft.
